# EUROPÄISCHE PATENTANMELDUNG

(11) **EP 2 333 624 A1**
(43) Veröffentlichungstag der Anmeldung: **15.06.2011**
(21) Anmeldenummer: 09015368.5
(22) Anmeldetag: 11.12.2009
(51) Int. Cl.: G05B 19/042

(54) **Verfahren und Einrichtung zur Konfigurierung einer Komponente in einer industriellen Automatisierungsanordnung**

(71) Anmelder: Siemens Aktiengesellschaft, 80333 München (DE)
(72) Erfinder: Herberth, Harald, 90522 Oberasbach (DE); Nitzsche, Stefan, 67227 Frankenthal (DE); Thurau, Oliver, 67117 Limburgerhof (DE)

(57) **Zusammenfassung**

Die Erfindung betrifft ein Verfahren zur Konfigurierung einer Komponente (K) in einer industriellen Automatisierungsanordnung, wobei der Komponente (K) ein Profil mit Konfigurationsdaten zugewiesen wird, und wobei in einem ersten Schritt eine die Komponente (K) betreffende Authentifizierungsinformation von der Komponente (K) zu einer Konfigurierungseinrichtung (CPMS) gesendet wird. Dabei wird in einem zweiten Schritt von der Konfigurierungseinrichtung (CPMS) anhand der Authentifizierungsinformation ein Profil für die Komponente ausgewählt oder erstellt wonach in einem dritten Schritt von der Konfigurierungseinrichtung (CPMS) das Profil zu der Komponente (K) übertragen und die Konfigurierungsdaten diesen Profils auf die Komponente (K) angewendet werden. Dadurch ist eine einfache und flexible Konfigurierung der Komponenten (K) möglich.

## Beschreibung

Die Erfindung betrifft ein Verfahren zur Konfigurierung einer Komponente in einer industriellen Automatisierungsanordnung gemäß dem Oberbegriff des Patentanspruchs 1, und eine Einrichtung zur Ausführung des Verfahrens gemäß dem Oberbegriff des Patentanspruchs 8.

In industriellen Automatisierungsanordnungen, also in der Produktions- und Prozessautomatisierung, nimmt der Umfang und die Komplexität der verteilten Steuerungssysteme und der damit verbundenen Komponenten kontinuierlich zu. Neben dem Erfordernis der Skalierbarkeit wachsen auch die Anforderungen hinsichtlich Flexibilität der Installationen, deren Konfiguration und der flexiblen Einbindung von weiteren Komponenten. Insbesondere die Konfigurierung von Bediengeräten ("HMI-Clients"; HMI = Human Machine Interface) wird dabei als erheblicher Kostenfaktor betrachtet, weil insbesondere Änderungen in der Bedienstruktur einer industriellen Automatisierungsanordnung umfangreiche Änderungen an Einstellungen ("Konfigurationen") dieser Komponenten erforderlich machen.

Dabei ist es üblich, Konfigurationsdaten für einzelne Geräte in sog. "Profilen" zusammenzufassen und je nach Erfordernis diese Profile zu den entsprechenden Komponenten zu übertragen, wobei die somit übertragenen Konfigurationsdaten auf die entsprechenden Komponenten angewendet werden. Dabei werden Einrichtungen zum Profile-Management ("Client Profile Management") eingesetzt, um in einer verteilten Umgebung, insbesondere bei verteilten Bediengeräten (HMI) und SCADA-Komponenten (SCADA = Supervisory Control and Data Acquisition), Komponenten mit den entsprechenden Konfigurierungsdaten und somit mit den richtigen Profilen zu versorgen. Diese Aufgabe wird heute durch ein zentrales "Engineering" geleistet, welches die zentrale Konfiguration von "Servern" und "Client-Computer-Nodes", also verteilten Komponenten, ermöglicht, wobei jedoch einige Nachteile auftreten. So können beispielsweise nur solche Komponenten ("Computer-Nodes") konfiguriert werden, welche während der Programmierungsphase ("Engineering") bekannt sind. Das führt dazu, dass sich die Konfiguration beim Austausch einer (beispielsweise defekten) Komponente ändert, was gemeinhin manuelle Eingriffe erforderlich macht. Ein weiterer Nachteil besteht darin, dass alle Komponenten ("Client-Computer-Nodes") zum Zeitpunkt des Ladens und der Aktivierung verfügbar sein müssen, also einen aktiven Betriebsstatus aufweisen müssen. Ein weiterer Nachteil im Stand der Technik besteht darin, dass in den Fällen, in denen eine Vielzahl von Komponenten mit einer identischen Konfigurierung versehen werden soll, diese identische Konfiguration, also das identische Profil, mehrfach erstellt und bereitgestellt werden muss. Die Auswahl eines zugeordneten Profils ist im Stand der Technik regelmäßig an den jeweiligen Benutzer einer Komponente gebunden, so dass bei der Änderung eines Benutzers dem neuen Benutzer und dem mit diesem verbundenen Profil alle Konfigurationsdaten neu zugeordnet werden müssen.

Es ist also eine Aufgabe der vorliegenden Erfindung, die o.g. Nachteile zu überwinden und zu einer zur Laufzeit flexiblen Konfigurierung von Komponenten industrieller Automatisierungsanordnungen zu gelangen.

Die Aufgabe wird durch ein Verfahren und eine Einrichtung gelöst, die in den unabhängigen Patentansprüchen angegeben sind.

Es ist dabei wesentlich für die erfindungsgemäße Lösung, dass unabhängig von Benutzerprofilen komponenten-spezifische Profile erstellt, verwaltet und zugewiesen werden.

Die Lösung der Aufgabe sieht insbesondere ein Verfahren zur Konfigurierung einer Komponente in einer industriellen Automatisierungsanordnung vor, wobei der Komponente ein Profil mit Konfigurationsdaten zugewiesen wird. Dabei wird in einem ersten Schritt eine die Komponente betreffende Authentifizierungsinformation von der Komponente zu einer Konfigurierungseinrichtung gesendet, wobei in einem zweiten Schritt von der Konfigurierungseinrichtung anhand der Authentifizierungsinformation ein Profil für die Komponente ausgewählt oder erstellt wird, und wobei in einem dritten Schritt von der Konfigurierungseinrichtung das Profil zu der Komponente übertragen und die darin enthaltenen Konfigurierungsdaten auf die Komponente angewendet werden. Damit können bereits grundlegende Konfigurierungen der Komponenten vorgenommen werden, bevor sich überhaupt ein Benutzer ("User") an der entsprechenden Komponente anmeldet, beispielsweise direkt nach dem "booten" der Komponente. Weiterhin ist es damit möglich, dass anhand der Authentifizierungsinformationen auch "neue", also der Konfigurierungseinrichtung bislang unbekannte Komponenten konfiguriert werden können.

Die Aufgabe wird weiter durch eine Einrichtung zur Konfigurierung einer Komponente in einer industriellen Automatisierungsanordnung gelöst, wobei die Einrichtung über Kommunikationsmittel zum Austausch von Authentifizierungsinformationen und Profilen mit Komponenten aufweist und darüber hinaus zur Durchführung des vorstehend beschriebenen Verfahrens eingerichtet ist. Eine solche Einrichtung zur Konfigurierung ist zur flexiblen Konfigurierung auch neuer oder geänderter Komponenten während der Laufzeit der Automatisierungsanordnung geeignet.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Einrichtung.

Vorteilhaft kann als die Authentifizierungsinformation eine eindeutige Bezeichnung der Komponente verwendet werden. Dies kann beispielsweise ein vom Betriebssystem verwendeter Computer-Name, eine Netzwerkadresse, eine Hardware-Adresse ("z.B. MAC"-Adresse) oder ein anderes Hardware- oder Software-Merkmal sein. Alternativ oder zusätzlich kann auch als Authentifizierungsinformation ein auf der Komponente gespeichertes oder in die Komponente eingegebenes Zertifikat verwendet werden. Insbesondere die Verwendung von Zertifikaten, die beispielsweise in einem lokalen, verschlüsselten Zertifikatsspeicher ("Encrypted Certificate Store") oder auf sog. "Smart-Cards" gespeichert sein können, erlaubt auch die Konfiguration von solchen Komponenten, die zum Engineering-Zeitpunkt noch nicht bekannt waren. Außerdem erschwert die Verwendung von Zertifikaten etwaige Manipulationsversuche. Obwohl die als Beispiel genannten Smart-Cards im Stand der Technik vorwiegend bei personenbezogenen Daten/Profilen üblich sind, können diese im Rahmen der Erfindung als Speicher für die Zertifikate, die der Identifizierung der Gerätekonfiguration dienen, eingesetzt werden, d.h., dass "on-the-fly" mit einer Smart-Card irgendein beliebiges Terminal zu einem "profil-konformen Client" konfiguriert werden kann.

Vorteilhaft umfasst die Authentifizierungsinformation zumindest eine Angabe über eine zumindest auf der Komponente installierte Applikation. Damit kann gewährleistet werden, dass solche Konfigurationsdaten erstellt und/oder auf die Komponente angewendet werden, die mit der zu verwendenden Applikation/Anwendung im Einklang stehen.

Eine weitere vorteilhafte Ausgestaltung besteht darin, dass die Authentifizierungsinformation eine Angabe über einen Standort oder eine Standort-Klasse der Komponente umfasst oder dass zumindest anhand der Authentifizierungsinformation ein Standort oder eine Standort-Klasse der Komponente ermittelbar ist, wobei diese Angabe zur Auswahl oder Erstellung des Profils ausgewertet wird. Damit kann beispielsweise zwischen öffentlichen und "sicheren" Standorten unterschieden werden, was Unterschiede in der Zugangs-Berechtigung bzw. der Überprüfung der Zugangs-Berechtigung einer Komponente bewirken kann. In einem weiteren Anwendungsbeispiel dieser vorteilhaften Ausgestaltung kann bestimmt werden, dass die Verfügbarkeit von Bedienfunktionen o.ä. davon abhängig gemacht wird, dass sich die entsprechende Komponente (Bediengerät) in unmittelbarer Nähe der damit bedienten Komponente befinden muss oder das Vorhandensein definierter Hardware- oder Software-Voraussetzungen bedingt.

Vorteilhaft ist das auswählbare oder erstellbare Profil jeweils für eine Mehrzahl Komponenten verwendbar, so dass der Aufwand für die Erstellung der Profile bzw. die Erstellung eines Regelwerks zur automatischen Erzeugung von Profilen vermindert wird. Dies ist insbesondere vorteilhaft im Zusammenhang mit der Konfigurierung von solchen Komponenten, die zum Engineering-Zeitpunkt dem System noch gar nicht bekannt sind.

Vorteilhaft wird in einem vierten Schritt abhängig von einem die Komponente jeweils nutzenden Benutzer ein zusätzliches Benutzer-Profil mit zusätzlichen Konfigurierungsdaten ermittelt, wodurch zusätzlich auch benutzerabhängige Konfigurationsdaten auf die Komponente angewendet werden können. Damit können sowohl komponenten-abhängige Konfigurationsdaten als auch benutzer-abhängige Konfigurationsdaten mit ein- und derselben Konfigurierungseinrichtung verwaltet werden.

Ein Ausführungsbeispiel des erfindungsgemäßen Verfahrens wird nachfolgend anhand der Zeichnungen erläutert. Es dient gleichzeitig der Erläuterung einer erfindungsgemäßen Einrichtung.

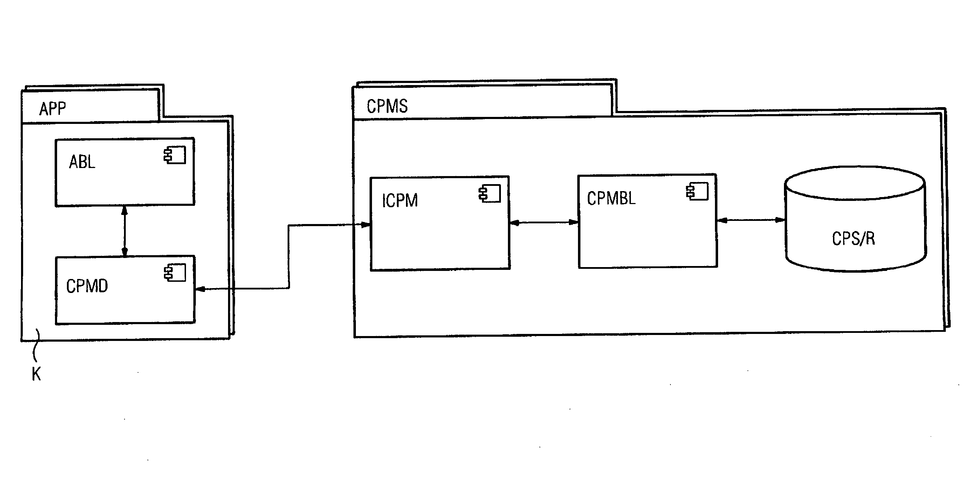

Dabei zeigt die einzige Figur in schematischer Darstellung eine Anordnung aus einer Komponente mit einer Applikation und einer Einrichtung zur Konfigurierung der Komponente.

Das Verfahren zur Konfigurierung einer Komponente in einer industriellen Automatisierungsanordnung wird auch "Profil-Management" oder "Client-Profile-Management" genannt. Dazu gehört, dass Profile ("Client-Profils") an einem zentralen Speicherort ("Client-Profile-Repository") gespeichert werden. Dazu gehört weiterhin, dass zu konfigurierende Komponenten ("Client-Computer-Nodes") identifiziert werden bzw. sich authentifizieren, um ein Profil abzurufen, wobei der Zugriff auf Profile durch einen Service ("Client-Profile-Managementservice"), der durch die Einrichtung bereitgestellt wird, gewährleistet wird.

Eine solche Anordnung ist in der Figur schematisch dargestellt. Dabei ist auf einer Komponente K eine Anwendung APP ("Application") installiert, welche zum einen die zu konfigurierende Software ABL ("Application Business Logic") umfasst und weiterhin eine Client-Komponente CPMD ("Client-Profile-Management-Delegate") aufweist. Diese Client-Komponente CPMD kommuniziert mit der Einrichtung CPMS ("Client-Profile-Management-Service"), welche entweder, wie hier dargestellt, aus verschiedenen Dienst-Komponenten eines einzelnen Servers besteht, oder aber auch in einem Netzwerk verteilt sein kann. Die Einrichtung CPMS umfasst dabei die Dienst-Komponente ICPM ("Interface-Client-Profile-Management"), die mit der client-seitigen Dienst-Komponente CPMD und der Dienst-Komponente CPMBL ("Client-Profile-Management-Business-Logic") zur Verarbeitung der Anfragen der Komponente K kommuniziert, und schließlich die Speicher-Komponente CPS/R ("Client-Profile-Storage/Repository"). Die Anwendung APP bezeichnet dabei eine beliebige Software der Komponente K, welche die Dienst-Komponente CPMD lädt bzw. benutzt. Diese stellt auf Seiten der Komponente K ein Interface zur Nutzung der Einrichtung CPMS zur Verfügung. Seitens der Einrichtung CPMS steht ebenfalls in Interface zur Kommunikation mit der Komponente K bereit, nämlich die Dienst-Komponente ICPM. Sie ist zum Datenaustausch mit der Komponente CPMBL eingerichtet, welche die Profile verwaltet und Profil-Anfragen der Komponente K bearbeitet und somit Zugriff auf die Speicher-Komponente CPS/R besitzt.

Beim Start der Anwendung APP werden Authentifizierungsinformationen von der Software ABL zum Zwecke des Ladens eines Profils über die komponenten-seitige Dienst-Komponente CPMD und die service-seitige Dienst-Komponente ICPM zu der Verarbeitungseinheit CPMBL der Einrichtung übermittelt. Dort werden die Authentifizierungsinformationen, die entweder die Komponente K identifizieren, oder aber ein der Komponente K zugeordnetes Zertifikat umfassen, ausgewertet. Als Ergebnis der Auswertung ruft die Dienst-Komponente CPMBL aus der Speicher-Komponente CMP/R ein zugeordnetes bzw. geeignetes Profil mit Konfigurationsdaten ab und stellt diese über die Dienst-Komponenten ICPM und CPMD der Software ABL zur Verfügung, wo diese Konfigurationsdaten angewendet werden. Alternativ oder zusätzlich zum Zugriff auf die Speicher-Komponente CPS/R kann die Dienst-Komponente CPMBL auch "online" ein geeignetes Profil erstellen und zu der Software ABL übertragen.

Im Rahmen der zuvor beschriebenen Anordnung kann ein einzelnes Profil für eine oder mehrere Komponenten K verwendet werden, die entweder bereits zum Engineering-Zeitpunkt dem System bekannt sind, oder aber auch nicht. Zumindest ein Teil der zugewiesenen Profile bzw. der damit übertragenen Konfigurationsdaten können bei einem nachfolgenden "Log-On" eines Benutzers auch durch benutzer-spezifische Profile ersetzt oder überschrieben werden. Komponenten, welche zum Engineering-Zeitpunkt dem System noch nicht bekannt sind, müssen aus Sicherheitsgründen sicher identifiziert werden. Eine einfache Möglichkeit dazu ist die Verwendung eines Computer-Namens, beispielsweise der Computer-Name, der von einem Betriebssystem zur Identifizierung der Komponente in einem Rechnernetzwerk verwendet wird. Da solche Computer-Namen heutzutage jedoch leicht verändert werden können und somit die Gefahr besteht, dass auch nicht-autorisierte Komponenten ein Profil anfordern, kann alternativ ein sogenanntes Zertifikat verwendet werden, welches komponenten-seitig installiert wird. Zusammen mit bekannten Verfahren zur asymmetrischen Verschlüsselung und einer verschlüsselten Speicherung des Zertifikats ("Encrypted Certificate Store") können solche Zertifikate sicher zur Identifizierung einer Komponente K verwendet werden. Dadurch, dass ein Zertifikat zu einem beliebigen Zeitpunkt einer Komponente zugeordnet bzw. auf dieser gespeichert werden kann und zudem auch ein- und dasselbe Zertifikat mehreren Komponenten zugeordnet werden kann, ergibt sich eine einfache Konfigurierbarkeit auch solcher Komponenten K, deren Computer-Name oder Hardware-Adresse oder sonstige Ausstattung, beispielsweise installierte Anwendungen, zum Engineering-Zeitpunkt noch nicht feststehen.

## Patentansprüche

1. Verfahren zur Konfigurierung einer Komponente (K) in einer industriellen Automatisierungsanordnung,
wobei der Komponente (K) ein Profil mit Konfigurationsdaten zugewiesen wird,
**dadurch gekennzeichnet,**
**dass** in einem ersten Schritt eine die Komponente (K) betreffende Authentifizierungsinformation von der Komponente (K) zu einer Konfigurierungseinrichtung (CPMS) gesendet wird,
**dass** in einem zweiten Schritt von der Konfigurierungseinrichtung (CPMS) anhand der Authentifizierungsinformation ein Profil für die Komponente ausgewählt oder erstellt wird, und
**dass** in einem dritten Schritt von der Konfigurierungseinrichtung (CPMS) das Profil zu der Komponente (K) übertragen und Konfigurierungsdaten diesen Profils auf die Komponente (K) angewendet werden.

2. Verfahren nach Patentanspruch 1,
**dadurch gekennzeichnet, dass**
als die Authentifizierungsinformation eine eindeutige Bezeichnung der Komponente (K) verwendet wird.

3. Verfahren nach einem der vorhergehenden Patentansprüche,
**dadurch gekennzeichnet,**
**dass** als die Authentifizierungsinformation ein auf der Komponente (K) gespeichertes oder in die Komponente (K) eingegebenes Zertifikat verwendet wird.

4. Verfahren nach einem der vorhergehenden Patentansprüche,
dadurch gekenntzeichnet,
dass die Authentifizierungsinformation zumindest eine Angabe über zumindest eine auf der Komponente (K) installierte Applikation umfasst.

5. Verfahren nach einem der vorhergehenden Patentansprüche,
**dadurch gekennzeichnet,**
**dass** die Authentifizierungsinformation eine Angabe über einen Standort oder eine Standort-Klasse der Komponente (K) umfasst oder dass anhand der Authentifizierungsinformation ein Standort oder eine Standort-Klasse der Komponente (K) ermittelbar ist, und
**dass** die Angabe zur Auswahl oder Erstellung des Profils ausgewertet wird.

6. Verfahren nach einem der vorhergehenden Patentansprüche,
**dadurch gekennzeichnet,**
**dass** das auswählbare oder erstellbare Profil jeweils für eine Mehrzahl Komponenten (K) verwendbar ist.

7. Verfahren nach einem der vorhergehenden Patentansprüche,
**dadurch gekennzeichnet,**
**dass** in einem vierten Schritt abhängig von einem die Komponente jeweils nutzenden Benutzer ein zusätzliches Benutzer-Profil mit zusätzlichen Konfigurierungsdaten ermittelt, zu der Komponente (K) übertragen und auf diese angewendet wird.

8. Einrichtung zur Konfigurierung einer Komponente in einer industriellen Automatisierungsanordnung,
**dadurch gekennzeichnet,**
**dass** die Einrichtung (CPMS) über Kommunikationsmittel (ICPM) zum Austausch von Authentifizierungsinformationen und Profilen mit Komponenten (K) aufweist und zur Durchführung eines der vorstehenden Verfahren ausgebildet ist.
